# EUROPEAN PATENT APPLICATION

(11) **EP 1 693 835 A2**
(43) Date of publication of application: **23.08.2006**
(21) Application number: 06250828.8
(22) Date of filing: 16.02.2006
(51) Int. Cl.: G11B 7/00, G11B 7/24

(54) **Optical recording medium and displaying method on surface of the medium**

(30) Priority: 18.02.2005 JP 2005043162
(71) Applicant: TAIYO YUDEN CO., LTD., Tokyo 110-0005 (JP)
(72) Inventor: Kobayashi, Satoshi, Tokyo 110-0005 (JP); Kodaira, Takuo, Tokyo 110-0005 (JP); Arai, Yuji, Tokyo 110-0005 (JP)
(74) Representative: Jackson, Richard Eric

(57) **Abstract**

In a method in the related art in which recording is performed using the data recording area and the drawing area, the areas being different from each other, since a surface of a data recording area on which recording is performed using laser light is different from a surface of a drawing area on which recording is performed using laser light, a medium is turned round for drawing after data have been recorded, therefore there has been a problem that much time is taken. An optical recording medium having a heat generating layer that generates heat and a coloring layer having an optical characteristic that is changed by heat caused by the heat generating layer is provided to realize recording of data and recording of drawing-images by laser light irradiation in the same direction.

## Description

### BACKGROUND OF THE INVENTION

### FIELD OF THE INVENTION

The present invention relates to an optical recording medium on which letters or images can be easily drawn by irradiating laser light to the recording medium, and a displaying method on a surface of the medium.

### DESCRIPTION OF RELATED ART

To display visible information (content names, photographs and the like) on a label surface for CD or DVD, writing by using a pen and the like, pasting a label on which content is written, or directly printing label content loaded into a computer on a surface of a label has been generally performed. However, there has been a problem in the displaying methods that the label surface may be damaged, resulting in difficulty in reproduction, or much time is taken for pasting the label, or when printing is concentratedly performed on a particular position on the label surface, weight balance of a medium is lost, resulting in disadvantages in high-speed reproduction.

Thus, to address the problem, methods have been developed in recent years in which recording-content is directly drawn on a recording medium using laser light.

As one of the methods, a method described, for example; in JP-A-2003-51118 is given, in which part of a data recording surface is allocated for an area for drawing letters or images (visual images), and the laser light is irradiated from a side of the data recording surface to draw the visual images.

As another method, a method described, for example, in JP-A-2000-173096 or JP-A-2002-203321 is given, in which an area (an upper side with respect to the recording area) different from a data recording area is provided so that the data area is not limited by a drawing area. Furthermore, a method described, for example, in JP-A-2002-219873 or JP-A-2003-242669 is given, in which a disk having a visual image recorded therein is removably attached to a disk having data recorded therein.

[Patent literature 1] JP-A-2003-51118.

[Patent literature 2] JP-A-2000-173096.

[Patent literature 3] JP-A-2002-203321.

[Patent literature 4] JP-A-2002-219873.

[Patent literature 5] JP-A-2003-242669.

### SUMMARY OF THE INVENTION

However, in the method in which the drawing area is allocated in the data recording area, there has been a problem that the data recording area is decreased, leading to decrease in the amount of data; in the method in which recording is performed using the data recording area and the drawing area which are different from each other, since a surface of the data recording area on which recording is performed using the laser light is vertically different from a surface of the drawing area on which recording is performed using the laser light, the medium is turned round to record drawing-images after data has been recorded, therefore there has been a problem that much time is taken, and the data and the drawing-images can not be recorded at the same time, in addition, since the light needs to be directly absorbed by a drawing surface to cause visual change in state of the surface, a color must be previously determined correspondingly to a material; and in the method in which a medium into which data were recorded is different from a medium into which drawing-images were recorded, there has been a problem that much time is taken for re-pasting and reliability is deteriorated after the re-pasting.

To address the problem, it is desirable to provide an optical recording medium in which visual images such as letters or images can be drawn by irradiating laser light from an optical information recording device, and an area for data information recording is separated from an area for visual image recording, and data recording and visual image recording can be separately or concurrently performed by irradiating the laser light from the same side.

In an aspect of an optical recording medium according to an embodiment of the invention, which has a recording layer and a semi-transmitting layer on a substrate and can record information by irradiating laser light from a side of the substrate, the medium includes a heat generating layer that is formed on a surface of the substrate at a side opposite to a surface to which the laser light is irradiated, and a layer having an optical characteristic that is changed by heat caused by the heat generating layer.

In another aspect of the optical recording medium according to an embodiment of the invention, a first transparent substrate is disposed at a side of the heat generating layer, and a first protection layer is disposed at a side of the coloring layer, and furthermore a reflective layer for reflecting the laser light that allows the heat generating layer to generate heat and visible light is disposed.

In further another aspect of the optical recording medium according to the embodiment of the invention, the reflective layer has a characteristic of diffusing heat generated in the heat generating layer, and heat conductivity of the reflective layer is larger than that of the transparent substrate.

In further another aspect of the optical recording medium according to the embodiment of the invention, the reflective layer includes a metal having the heat conductivity larger than that of the first transparent substrate, and a second protection layer is disposed between the reflective layer and the coloring layer.

In further another aspect of the optical recording medium according to the embodiment of the invention, a spiral groove for tracking is formed at a side of the heat generating layer of the first transparent substrate.

In further another aspect of the optical recording medium according to the embodiment of the invention, a data information recording layer that can record and/or reproduce data information using laser light having a wavelength different from that of the laser light that allows the heat generating layer to generate heat is disposed.

In further another aspect of the optical recording medium according to the embodiment of the invention, the laser light for recording the data information is used for generating heat in the heat generating layer; and the data information recording layer has a second reflective layer at a side of the heat generating layer, and a second transparent substrate at a side of the data information recording layer opposite to a side of the heat generating layer, and the second reflective layer is formed by a semi-transmitting layer that transmits the laser light that allows the heat generating layer to generate heat, and an adhesive layer is provided between the semi-transmitting layer and the first transparent substrate.

In an aspect of a displaying method on a surface of an optical recording medium according to an embodiment of the invention, in which the medium has a recording layer and a semi-transparent layer on a substrate, and information is recorded by irradiating the laser light from a side of the substrate, and the information is displayed on a surface of the substrate at a side opposite to a surface to which the laser light is irradiated; the laser light is irradiated from the same surface side as the surface side at which the laser light is irradiated during recording the information, thereby the information is displayed on a surface of the optical recording medium. Advantage of the Invention

According to the embodiment of the invention, as described before, the heat generating layer that generates heat at a side where the laser light for drawing is irradiated, and the layer having the optical characteristic that is changed by the heat caused by the heat generating layer, for example, the coloring layer are disposed, thereby heat is generated in the heat generating layer by irradiating the laser light to the heat generating layer, and the coloring layer corresponding to the heated portion is changed in state, consequently colored visible-information can be seen from a side of a label surface.

Furthermore, according to the embodiment of the invention, the first transparent substrate is disposed at the side of the heat generating layer, thereby the heat generating layer can be protected and the laser light for recording the visible information such as drawing-images can be transmitted; and the protection layer is formed also on a surface of the coloring layer, thereby the coloring layer can be also protected.

Furthermore, according to the embodiment of the invention, the reflective layer is formed between the heat generating layer and the coloring layer, thereby the visible information recorded in the coloring layer can be clearly seen from the label surface at a side opposite to the side of the surface to which laser irradiation was performed, in addition, the metal that is a material having the heat conductivity larger than that of the first transparent substrate is used for the reflective layer, thereby the heat generated in the heat generating layer is transmitted to the coloring layer side via the reflective layer without being transmitted to the side of the first transparent substrate to allow efficient coloring of the coloring layer.

Furthermore, according to the embodiment of the invention, the protection layer is formed between the reflective layer and the heat generation layer, thereby the reflective layer and the heat generating layer can be protected, and the spiral groove is formed on the first transparent substrate, thereby the laser light for recording the visible information is introduced so that accurate visible information can be recorded.

Furthermore, according to the embodiment of the invention, the second transparent substrate having a recording layer into/from which data information such as music, images, and programs can be recorded and/or reproduced using laser light having a wavelength different from that of the laser light irradiated to the heat generating layer is disposed on a surface of the first transparent layer at a side opposite to the side of the heat generating layer, thereby music information, image information, programs and the like can be recorded into the recording layer, and content of the music, image information, programs and the like can be recorded as visible information by using the coloring layer, therefore time for printing on the label surface of the CD or DVD disk is not necessary unlike the related art.

Furthermore, according to the embodiment of the invention, visible information is recorded using laser light having a wavelength longer than that of the laser light for recording data information, thereby adverse effects of the laser light for recording the visible information on the recording layer can be prevented.

Furthermore, according to the embodiment of the invention, the laser light irradiated to the heat generating layer is transmitted to a surface of the data information recording layer at a side opposite to the side of the second transparent surface, and the semi-transmitting layer that transmits the laser light for recording and/or reproducing information with respect to the data information recording layer is formed, thereby the visible information can be recorded by irradiating the laser light for drawing for transmitting heat from the recording layer side to the heat generating layer, and the visible information can be recorded from the recording layer side and the data information can be recorded and/or reproduced without needing turn of the disk; and the semi-transmitting layer and the first transparent substrate are integrated via the adhesive layer, thereby a drawing portion as visible information and a recording portion as data information of the music or images can be easily integrated.

### BRIEF DESCRIPTION OF THE DRAWINGS

Fig. 1 is a cross section view of an optical recording medium according to an embodiment of the invention; and
Fig. 2 is a cross section view of the optical recording medium in the case that visible information is recorded using a spiral groove formed in a semi-transmitting layer.

### DESCRIPTION OF THE PREFERRED EMBODIMENTS

According to the embodiment of the invention, the heat generating layer that generates heat to a side at which the laser light for drawing is irradiated and the coloring layer having the optical characteristic that is changed by the heat caused by the heat generating layer are disposed, and heat is generated from the heat generating layer using the laser light to cause optical change in the coloring layer so that drawing-images as the visible information are shown.

### [Embodiment 1]

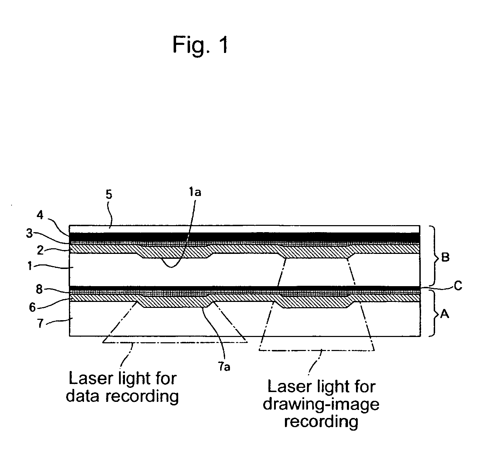

Hereinafter, an embodiment of an optical recording medium according to the invention will be described with Fig. 1.

The optical recording medium according to the embodiment of the invention includes an information recording layer A in which data information including music, images, or programs is recorded, and a visible information section B in which information showing content of data information recorded in the recording layer that can be viewed from a label surface side in the figure (upper side in the figure) is recorded, and the two of the information recording layer A and the visible recording section B are adhered to each other with an adhesive layer C.

When a medium includes only the visible recording section B, the medium can be used as a recording medium such as credit card in which a name or an ID code of a user is recorded, and when the information recording layer A and the visible recording section B are adhesively integrated by the adhesive layer C, the medium can be used as a CD or DVD disk that is writable or writable-and-erasable.

Next, a configuration of the visible recording section B is described. 1 is a transparent substrate including a transparent resin material such as polycarbonate resin material or acrylic resin material; 2 is a heat generating layer including an organic dye (for example, phthalocyanine, cyanine, and azo series dyes) disposed on the transparent substrate 1, which generates heat when the layer is subjected to irradiation of laser light having a particular wavelength; and 3 is a reflective layer that enables focus control by reflecting part of the laser light irradiated to the heat generating layer 2, and reflects light from a protection layer 5 described later, and blocks effects of a color of the heat generating layer 2 on a coloring layer 4 described later, and diffuses heat generated in the heat generating layer 2, and includes a material having the heat conductivity larger than that of the transparent substrate 1 (for example, silver, silver-containing alloy, or aluminum). When the visible recording section B is used independently, a spiral groove 1a for tracking may be formed for the reflective layer 3 in the transparent substrate 1 to perform accurate recording by irradiating the laser light for visible recording.

4 is a layer having the optical characteristic that is changed by heat, and for example, a coloring layer including a heat sensitizing agent and the like disposed on the reflective layer 3. The heat sensitizing agent includes a mixture of a developer (for example, bisphenol-A or bisphenol-S), coloring precursor (for example, fluoran series black dye), sensitizer (for example, "BON" manufactured by UENO FINE CHEMICALS INDUSTRY, LTD or "EGTE" manufactured by SANKOSYA), pigment (for example, silicon oxide or titanium oxide), binder (for example, polyvinyl alcohol or cellulose derivative) and the like. To further improve the coloring efficiency, the coloring layer 4 may contain a photothermal conversion material such as a material used for the heat generating layer 2. Moreover, the same organic material or inorganic material (for example, AgInSbTe or GeSbTe) as the heat generating layer can be used for the coloring layer 4 itself. While the coloring layer 4 described here is assumed, for example, as a layer having the optical characteristic that is changed by heat, the layer is not limited to this, and for example, a layer may be used, in which change in optical characteristic occurs due to heat, causing optical interference, thereby difference in brightness occurs visually. Moreover, the reflective layer 3 may be used as the layer having the optical characteristic that is changed by heat by using change in optical characteristic of the layer 3. 5 is a transparent material disposed on the coloring layer 4 for protecting the coloring layer 4, and a UV-cure acrylic resin and the like can be given as the material.

It is desirable in the light of recording more stable visible-information that a second protective layer, while not shown, is formed using the UV-cure acrylic resin between the reflective layer 3 and the coloring layer 4 to protect the reflective layer 3 and the coloring layer 4.

In the visible recording section B configured in this way, laser light having a wavelength that can heat the heat generating layer 2 is irradiated from a side of the transparent substrate 1 to the heat generating layer 2 locally according to visible information. A position at which the visible information is drawn is realized by rotating the visible information section B and moving a laser source in a radial direction of a disk. In the movement of the disk in the radial direction, positioning accuracy in the radial direction can be improved by controlling the laser light along the spiral groove formed in the transparent substrate 1.

Heat generated in the heat generating layer 2 is mainly absorbed by the reflective layer 3 having the heat conductivity higher than that of the transparent substrate 1, and a portion in the reflective layer 3 corresponding to a heating portion of the heat generating layer 2 is also heated. Once the reflective layer 3 is partially heated, characteristics of visible light (optical characteristics (hue, brightness of color, and chroma), spectrum, reflectivity, transmittance, and light scattering) in a portion of the coloring layer 4 corresponding to the heated portion are changed, consequently letters or figures are recorded by thick lines. Therefore, the letters or figures drawn in the coloring layer 4 can be seen from a side of the protection layer 5, in addition, since they are reflected by the reflective layer 3, the letters or figures can be clearly seen. Moreover, since the reflective layer 3 can reflect part of the laser light irradiated to the heat generating layer 2 to a detection system of a recording device and the like, the reflective light can be used to control the movement of the disk in the radial direction in addition to focus control during drawing.

Next, the case that the information recording layer A is integrated with the visible recording section B via the adhesive layer C is described.

The information recording layer A includes a recording layer 6 in which music data, image data, programs and the like are stored as the CD or DVD disk; a second transparent substrate 7 including polycarbonate which is disposed on a bottom of the recording layer 6 and has a spiral groove 7a for tracking; and a semi-transparent layer 8 disposed on a top of the recording layer 6.

While the reflective layer formed on the recording layer 6 completely reflects the laser light in the known CD or DVD disk, in the embodiment of the invention, the laser light is irradiated from a side of the recording layer 6 to record the visible information into the coloring layer 4, therefore the laser light for recording the visible information is necessary to be transmitted through the reflective layer. Thus, a semi-transmitting layer 8 was determined to be used in the embodiment of the invention instead of the total-reflection-type reflective layer. The semi-transmitting layer 8 can be formed by a dielectric multi-layer film including metal (for example, Ag, Ag alloy, and Al) films or oxide films having the refractivity different from each together, the film being stacked, and at least a film that can transmit the laser light for drawing used for drawing is necessary to be used as the film.

Moreover, the wavelength of the laser light for recording data into the recording layer 6 is necessary to be different from the wavelength of the laser light for recording visible information into the coloring layer. That is, in the embodiment of the invention, in which recording of data information and recording of visible information are performed in the same direction, and the two types of information can be recorded without needing turn of the disk, when the wavelength of the laser light for recording the data information is equal or close to the wavelength of the laser light for recording the visible information, the two kinds of laser light tend to interfere with each other, which is not preferable for both data recording and visible drawing.

Thus, difference in absorbance (peak) between the two kinds of laser light is made to be 75 nm or more, preferably 100 nm or more, and most preferably 125 nm or more, thereby interference between the two kinds of laser light is eliminated, and consequently data information and visible information can be accurately recorded. Specifically, since recording into the recording layer 6 is typically performed using a wavelength of about 660 nm in the case of the DVD disk, when the difference in absorbance is made to be 100 nm, laser light for irradiating light having a wavelength of 760 nm is used for recording the visible information, and thickness of the disk and materials of the heat generating layer 2 and the coloring layer 4 are selected to allow recording of the visible information at the wavelength, and a material of the semi-transmitting layer 8 is appropriately selected; thereby data and drawing-images can be recorded.

In this way, various materials are selected, thereby data information such as music or images can be recorded into the recording layer 6 using the laser light for data recording having the wavelength for recording data while the light is subjected to tracking by the spiral groove 7a formed in the transparent substrate 7, and visible information can be recorded while the laser light for drawing-image recording is subjected to tracking by the spiral groove 1a formed in the transparent substrate 1 in the same direction as the laser light for data recording.

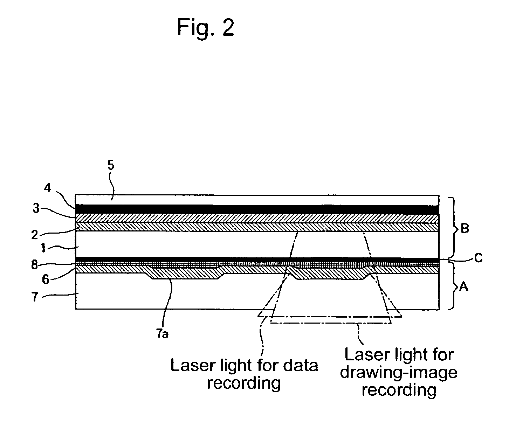

While Fig. 1 shows a case that the data information is recorded into the recording layer 6 and the visible information is recorded into the coloring layer 4 separately while tracking is carried out by the spiral grooves la, 7a formed in the transparent substrates 1, 7, as shown in Fig. 2, the recoding of the data information and the recording of the visible information can be concurrently performed while the tracking is carried out using the spiral groove 7a formed in the transparent substrate 7. In this case, repeated operation that the data information is recorded, and then the visible information is recorded can be eliminated.

## Claims

1. An optical recording medium which has a recording layer and a semi-transmitting layer on a substrate and can record information by irradiating laser light from a side of the substrate, the medium comprising,
a heat generating layer that is formed on a surface of the substrate at a side opposite to a surface to which the laser light is irradiated and generates heat by irradiation of the laser light,
and a layer having an optical characteristic that is changed by heat caused by the heat generating layer.

2. The optical recording medium according to claim 1, wherein the layer having the optical characteristic that is changeable comprises a coloring layer.

3. The optical recording medium according to claim 1, wherein a first transparent substrate is disposed at a side of the heat generating layer.

4. The optical recording medium according to claim 2, wherein a first protection layer is disposed at a side of the coloring layer.

5. The optical recording medium according to any one of claims 2 to 4, wherein a reflective layer that reflects the laser light that allows the heat generating layer to generate heat and visible light is disposed.

6. The optical recording medium according to claim 5, wherein the reflective layer has a characteristic of diffusing heat generated in the heat generating layer.

7. The optical recording medium according to claim 5, wherein heat conductivity of the reflective layer is larger than that of the first transparent substrate

8. The optical recording medium according to any one of claims 5 to 7, wherein the reflective layer comprises a metal having the heat conductivity larger than that of the first transparent substrate.

9. The optical recording medium according to claim 5, wherein a second protection layer is disposed between the reflective layer and the coloring layer.

10. The optical recording medium according to claim 3, wherein a spiral groove for tracking is formed in the first transparent substrate.

11. The optical recording medium according to claim 1, wherein a data information recording layer is disposed, at the opposite side of the heat generating layer of the first transparent substrate which can record and/or reproduce data information using laser light having a wavelength different from that of the laser light that allows the heat generating layer to generate heat.

12. The optical recording medium according to claim 11, wherein laser light having a wavelength longer than that of the laser light for recording the data information is used to allow the heat generating layer to generate heat.

13. The optical recording medium according to claim 11, wherein the data information recording layer has a second reflective layer at a side of the heat generating layer, and a second transparent substrate at a side of the data information recording layer opposite to a side of the heat generating layer, and the second reflective layer is formed by a semi-transmitting layer that transmits the laser light that allows the heat generating layer to generate heat.

14. The optical recording medium according to claim 13, wherein the medium has an adhesive layer between the semi-transmitting layer and the first transparent substrate.

15. A displaying method on a surface of an optical recording medium in which the medium has a recording layer and a semi-transmitting layer on a substrate, and information is recorded by irradiating laser light from a side of the substrate, and the information is displayed on a surface of the substrate at a side opposite to a surface to which the laser light is irradiated; wherein the laser light is irradiated from the same surface side as the surface side at which the laser light is irradiated during recording the information, thereby the information is displayed on a surface of the optical recording medium.
